# EUROPÄISCHE PATENTANMELDUNG

(11) **EP 1 820 620 A1**
(43) Veröffentlichungstag der Anmeldung: **22.08.2007**
(21) Anmeldenummer: 07002867.5
(22) Anmeldetag: 10.02.2007
(51) Int. Cl.: B29C 43/00, B29C 43/36, F16D 69/02

(54) **Verfahren und Vorrichtung zur Herstellung von Reibbelägen**

(30) Priorität: 15.02.2006 DE 102006006921
(71) Anmelder: TMD Friction Services GmbH, 51381 Leverkusen (DE)
(72) Erfinder: Hogenkamp, Wolfgang, 42349 Wuppertal (DE); Tasto, Hilmer, 50674 Köln (DE); Hell, Manfred, 42657 Solingen (DE)
(74) Vertreter: Müller, Eckhard

(57) **Zusammenfassung**

Die vorliegende Erfindung betrifft ein Verfahren zur Herstellung von Reibbelägen (10) sowie eine Vorrichtung zur Durchführung des Verfahrens, wobei eine Bindemittel aufweisende Reibbelagmischung (12) in eine Pressform (14) gegeben und einem Formgebungsprozess unterzogen wird. Hierbei ist zur Formgebung des Reibbelags (10) und zum im Wesentlichen vollständigen Vernetzen des Bindemittels während des Formgebungsprozesses ein mittels eines Presswerkzeugs (16) erzeugbarer Druck von maximal 6 N/mm² auf die Reibbelagmischung vorgesehen (Figur 2).

## Beschreibung

Die vorliegende Erfindung betrifft ein Verfahren und Vorrichtung zur Herstellung von Reibbelägen, insbesondere von Reibbelägen für Kupplungen und/oder Bremsen von Fahrzeugen, die ausgehend von einer Reibbelagmischung mittels eines Formgebungsprozesses hergestellt werden.

### Stand der Technik

Reibbeläge sind unabdingbare Komponenten einer Bremse oder einer Kupplung eines Fahrzeugs. Ein Scheibenbremsbelag besteht typischerweise aus einer mit Klebstoff beschichteten Stahlbelagträgerplatte, auf die eine harzgebundene Schüttmasse aufgepresst wird. Derartige Schüttmassen oder Reibbelagmischungen bestehen typischerweise aus einem Gemisch von Metallpulvern, Gleitmitteln, Abrasivstoffen, Bindemitteln, Fasern und weiteren Füllstoffen.

Das im Stand der Technik bekannt Herstellungsverfahren für Reibbeläge ist im Wesentlichen zweistufig.

So beschreibt beispielsweise die DE 100 40 996 A1, dass ein aus einer Reibbelagmischung bestehender Wicklung zunächst einem formgebenden Verfahrensschritt, nämlich einem Heißpressen in einer Hochdruckpresse, und daran anschließend einem Aushärtevorgang unterzogen wird, in welchem die Bindemittel der verdichteten Mischung vernetzen. Hierbei können vorgegebene Eigenschaften des Reibbelags, wie eine ausreichende Härte, Festigkeit und die gewünschten Kompressibilitätseigenschaften erzielt werden.

Die Formgebung des Reibbelags erfolgt überwiegend durch den Heißpressvorgang, welcher bei einer Umgebungstemperatur zwischen 50 °C und 200 °C und einem relativ hohen Pressdruck auf die Reibbelagmischung in Höhe von 15 N/mm² bis 150 N/mm² abläuft. Des Weiteren müssen beim Heißpressvorgang die in der Reibbelagmischung bestehenden Gaseinschlüsse oder während des Heißpressvorgangs erzeugten Reaktionsgase aus der Pressform abgeführt werden. Dies geschieht typischerweise mittels eines separaten Entlüftungsvorgangs, bei welchem der Pressdruck deutlich verringert wird, um so einen Gasaustritt aus der Pressform zu ermöglichen.

Aus der WO 92/05023 A1 D ist ein mehrstufiges Herstellungsverfahren für ein Composite-Material bekannt, wobei ein Verbundmaterial, bestehend aus einer Mischung aus einem aushärtbaren Bindemittel, Feststoffen und optionalen weiteren Additiven, unterschiedlichen zeitlich aufeinander folgenden Bearbeitungsschritten unterzogen wird. In einem ersten Schritt wird zunächst ein Pressling geformt, indem der Verbundwerkstoff in eine vorgegebene kompakte Form gepresst wird. Danach wird durch Aushärten des Bindemittels der Ausgangsstoff erzeugt und anschließend der so geformte Ausgangsstoff einem nachträglichen Härtevorgang unterzogen. Die Press- und Härtvorgänge umfassen eine Press- und Heizphase, in welcher das Verbundmaterial einem Druck und einer Ultraschall-Energiedissipation bzw. einer Ultraschallanregung ausgesetzt wird. Nach der Press- und Heizphase folgt eine beginnende Härtephase, in welcher das Bindemittel bis zu einem gewünschten Grad unter gleichzeitiger Anwendung von Druck und Ultraschallanregung aushärtet. Daran anschließend ist eine Verweil- und Konsolidierungsphase vorgesehen, in welcher das Bindemittel lediglich unter Druckanwendung bis zu einem gewünschten Grad weiter aushärtet. Zur Fertigstellung eines ausreichend formstabilen Reibbelages ist jedoch stets ein separater und gesonderter Härtevorgang vorgesehen, der mitunter einige Stunden andauert.

Auch die DE 102 18 560 A1 beschreibt ein Herstellungsverfahren mit verschiedenen aufeinander folgenden Formgebungsprozessen, nämlich ein Heißpressen und ein nachgeschaltetes Härten.

Die DE 199 53 438 C2 betrifft ein Herstellungsverfahren, bei welchem gas- oder dampfförmige Medien während des Pressvorgangs durch mehrere Öffnungen im Presswerkzeug verteilt aus dem Pressgut abgeführt werden. Die Formgebungsprozedur folgt in mehreren aufeinander folgenden Presszyklen, zwischen denen jeweils Entgasungszyklen vorgesehen sind.

Die DE 100 43 527 C2 beschreibt ein Herstellungsverfahren, bei welchem das Formennest vor dem eigentlichen Pressvorgang zur Vorverdichtung der Schüttmasse horizontalen Vibrationen ausgesetzt wird.

### Problem

Sämtliche aus dem Stand der Technik bekannten Herstellungsverfahren für Reibbeläge weisen den gemeinsamen Nachteil auf, dass unterschiedliche Prozessschritte, wie zum Beispiel das Heißpressen und das anschließende Härten der gepressten Reibbelagmischung, nacheinander ablaufen.

Dies ist insbesondere vor dem Hintergrund nachteilig, dass für den Heißpressvorgang und den Härtevorgang und ggf. für einen sich daran anschließenden Oberflächen-Behandlungsvorgang die Zwischenprodukte der Reibbeläge unterschiedlichen, für die jeweiligen Prozesse vorgesehenen Formen und Spannvorrichtungen zugeführt und aus diesen auch wieder entnommen werden müssen. Dies ist unter fertigungstechnischen Gesichtspunkten, insbesondere für die Massenproduktion von Nachteil.

Die einzelnen Komponenten Belagträgerplatte, Zwischenschicht bzw. Keilschicht und die zu verdichtende Schüttmasse bzw. die Reibbelagmischung weisen unterschiedliche Wärmekapazitäten und Wärmeleitfähigkeiten auf, sodass bei einem relativ schnell, typischerweise im Bereich einiger Minuten ablaufenden Heißpressvorgang, eine relativ inhomogene Erwärmung erfolgt, die mitunter zu nachteiligen Thermospannungen innerhalb des Reibbelags führt.

Insbesondere wenn Wärmeeintrag in die Reibbelagmischung über die Pressform oder ein Presswerkzeug erfolgt, findet eine Wärmeleitung innerhalb des zu formenden Presslings von außen nach innen statt. Hinzu kommt, dass die Vernetzungsreaktion der Bindemittel durch den Wärmeeintrag in die Reibbelagmischung ausgelöst wird, wodurch die Viskosität der Bindemittel abnimmt, sodass die zu verpressenden Partikel der Reibbelagmischung von den schmierenden Bindemitteln benetzt werden können.

Zum Schließen von Poren in der Reibbelagmischung benötigen die unter Wärmeeinwirkung aufschmelzenden Bindemittel jedoch eine gewisse Zeit, um sich im Zustand niedriger Viskosität an die unterschiedlichen Partikel der Reibbelagmischung anzuschmiegen.

Wenn jedoch der der Temperatureintrag in die Reibbelagmischung aufgrund hoher Temperaturunterschiede zwischen Umgebung und Reibbelagmischung relativ schnell erfolgt, dann wird diese Phase niedriger Viskosität der Bindemittel relativ schnell durchlaufen, sodass für eine Benetzung der Reibbelagpartikel durch das Bindemittel nur eine relativ kurze Zeitspanne zur Verfügung steht.

In diesem Zusammenhang ist ferner zu berücksichtigen, dass bei fortschreitender Vernetzung die Viskosität der Bindemittel bzw. die Viskosität des Gesamtgefüges wieder zunimmt und letztendlich während des Pressvorgangs Bereiche unterschiedlicher Viskosität innerhalb der Reibbelagmischung entstehen.

Bei einem schnellen Temperatureintrag in den Pressling wandern somit "schalenartige" Fronten vergleichbarer niedriger Viskosität von außen in den unter Presskraft stehenden Formling nach innen. Nur innerhalb solcher Viskositätsbereiche, in denen das Bindemittel überwiegend plastisch ist, können die Setz- bzw. Vernetzungs- und Anschmiegevorgänge ablaufen. Es kommt somit zu einem schalenartigen Setzen bzw. Vernetzen des Reibbelags, wobei insbesondere unter dem am Heißpressvorgang vorliegenden Pressdrucks von bis zu 150 N/mm² Spannungen im Belaggefüge auftreten können.

Solche Spannungen sind jedoch hinsichtlich der Festigkeit des herzustellenden Reibbelags von Nachteil und führen mitunter zu Rissbildungen im späteren Betrieb oder bereits während der Produktion.

### Aufgabe

Der vorliegenden Erfindung liegt daher die Aufgabe zugrunde, eine möglichst homogene, stabile, insbesondere spannungsarme und vorzugsweise rissfreie Struktur eines Reibbelags zur Verfügung zu stellen.

Des Weiteren hat die Erfindung zum Ziel, ein vereinfachtes Herstellungsverfahren für Reibbeläge bei gleichzeitiger Aufwands- und Kosteneinsparung zur Verfügung zu stellen, was sich insbesondere hinsichtlich fertigungsrationeller Aspekte gegenüber vorbekannten Herstellungsverfahren auszeichnet.

### Erfindung und vorteilhafte Wirkungen

Die der Erfindung zugrunde liegende Aufgabe wird mit Hilfe eines Verfahrens zur Herstellung von Reibbelägen gemäß Patentanspruch 1 und mittels einer Vorrichtung gemäß Patentanspruch 14 gelöst. Weitere vorteilhafte Ausführungsformen der Erfindung sind in den Unteransprüchen angegeben.

Die Erfindung betrifft ein Verfahren zur Herstellung von Reibbelägen, insbesondere von Reibbelägen für den Einsatz in Kupplungen und/oder Bremsen von Fahrzeugen. Der Ausgangsstoff bzw. die Reibbelagmischung oder Schüttmasse für den Reibbelag wird in eine Form gegeben und einem Formgebungsprozess unterzogen. Zum im Wesentlichen vollständigen Vernetzen der Bindemittel der Reibbelagmischung während des Formgebungsprozesses wird ein mittels eines Presswerkszeugs erzeugbarer Druck von maximal 6 N/mm² auf die Reibbelagmischung ausgeübt.

Im Gegensatz zu den im Stand der Technik bekannten Herstellungsverfahren für Reibbeläge zeichnet sich das erfindungsgemäße Herstellungsverfahren dadurch aus, dass anstelle mehrerer Press- und Härteprozesse nunmehr lediglich nur noch ein einziger, das heißt einstufiger Formgebungsprozess stattfindet, bei dem im Vergleich zu vorbekannten Heißpressvorgängen ein deutlich geringerer Druck auf die zu verpressende Reibbelagmischung ausgeübt wird.

Hierbei ist von Vorteil, dass deutlich geringere Presskräfte zur Herstellung des Reibbelags ausreichen, was sich vorteilhaft bezüglich des apparativen Aufwands für die Reibbelagherstellung auswirkt. Zudem ist nach der Erfindung nur noch ein einziger formgebender Prozessschritt erforderlich, bei welchem die Reibbelagmischung hinreichend verdichtet und die Bindemittel im Wesentlichen vollständig vernetzen, sodass nach Ablauf dieses einzigen Formgebungsprozesses ein Reibbelag vorgegebener Härte, Festigkeit und mit den gewünschten Kompressibilitätseigenschaften gebildet wird.

Das Durchführen lediglich eines einzigen Formgebungsprozesses anstelle eines Heißpressens, eines anschließenden Aushärtens und ggf. eines sich daran anschließenden Oberflächen-Behandlungsvorgangs, wie in etwa eines Schleifvorgangs, ist nach fertigungsrationellen Gesichtspunkten, insbesondere hinsichtlich der Massenproduktion von Reibbelägen von Vorteil.

Bei dem erfindungsgemäßen Formgebungsprozess werden die im Stand der Technik üblichen und nacheinander ablaufenden Verfahrensschritte, in welchem die Reibbelagmischung zunächst unter hohem Druck zu einem formstabilen Grünling verpresst und anschließend zur Vernetzung der Bindemittel einem Härtevorgang unterzogen wird, vereint.

Dabei wird die Reibbelagmischung während des Formgebungsprozesses möglichst langsam und homogen erwärmt, damit ein möglichst gleichmäßiger Wärmeeintrag in die zu verdichtende Reibbelagmischung erfolgt, sodass innerhalb der Mischung möglichst große Bereiche mit im Wesentlichen gleichen viskosen Eigenschaften entstehen.

Die nach dem erfindungsgemäßen Verfahren hergestellten Reibbeläge weisen eine homogene und stabile Reibbelagstruktur auf, die im Wesentlichen riss- und spannungsfrei ist. Bereits daher zeichnen sich solche nach dem erfindungsgemäßen Verfahren hergestellten Reibbeläge durch eine hohe Qualität und einen geringen Verschleiß aus.

Nach einer ersten vorteilhaften Ausführungsform der Erfindung bleibt der auf die Reibbelagmischung während des gesamten Formgebungsprozesses ausgeübte Druck im Wesentlichen konstant oder er nimmt im Wesentlichen kontinuierlich ab.

Nach dem erfindungsgemäßen Herstellungsverfahrens sind keine gesonderten Entlüftungsvorgänge vorgesehen, bei denen mit Hilfe des Presswerkzeugs der auf die Reibbelagmischung ausgeübte Druck alternierend erhöht oder verringert wird. Etwaige komplexe Regelvorgänge zur Druckminderung oder Druckerhöhung während des Formgebungsprozesses sind daher nicht erforderlich und müssen daher auch nicht in den Herstellungsprozess implementiert werden, was sich Kosten minimierend auswirkt.

Nach einer weiteren Ausführungsform der Erfindung ist vorgesehen, dass zumindest zu Beginn des Formgebungsprozesses eine im Wesentlichen homogene Erwärmung der Reibbelagmischung auf eine Formgebungstemperatur erfolgt. Der Wärmeeintrag in die Reibbelagmischung soll hierdurch möglichst kontinuierlich und langsam erfolgen, sodass möglichst große Bereiche innerhalb der Reibbelagmischung mit im Wesentlichen gleichen viskosen Eigenschaften entstehen.

Durch homogene und vergleichsweise langsam ablaufende Erwärmung der Reibbelagmischung laufen die Vernetzungs- bzw. Setzvorgänge innerhalb der Reibbelagmischung im Wesentlichen gleichzeitig und gleichmäßig ab, so dass ein über die Fläche des Reibbelags gleichmäßiges Verdichten der Reibbelagmischung und gleichmäßiges Vernetzen der Reibbelag-Mischungspartikel erfolgt. Dies ermöglicht insbesondere die Fertigung besonders homogener und stabiler Reibbelagsstrukturen, die im Wesentlichen riss- und spannungsfrei sind und folglich gegenüber den im Stand der Technik bekannten Reibbelägen eine höhere Qualität und einen geringeren Verschleiß aufweisen.

Durch die langsame und homogene Erwärmung der Reibbelagmischung wird die plastische und niedrig viskose Phase der Bindemittel in vorteilhafter Weise ausgenutzt. Durch die homogen über die Belagmatrix absenkbare Viskosität der Bindemittel wird die dem Reibbelag inhärente Reibung der einzelnen Reibbelagpartikel reduziert, sodass zur Formgebung der Reibbeläge mit einer deutlich geringeren Formgebungs- bzw. Presskraft als bei den aus dem Stand der Technik bekannten Formgebungsprozessen gearbeitet werden kann.

Die Arbeitswerkzeuge und die Pressform müssen daher nur für geringere mechanische Beanspruchungen als bisher üblich ausgelegt und somit kostengünstiger realisiert werden, was deren Standzeit wesentlich erhöht.

Nach einer weiteren Ausführungsform wird die Reibbelagmischung während des Formgebungsprozesses zumindest zeitweise auf die Formgebungstemperatur erhitzt. Diese Formgebungstemperatur liegt im Wesentlichen im Bereich der Vernetzungstemperatur der Bindemittel der Reibbelagmischung.

Von Vorteil ist weiterhin, dass die Reibbelagmischung bereits vor dem Formgebungsprozess, das heißt vor Ausübung eines Drucks oder Vorerwärmung auf die Formgebungstemperatur auf eine Temperatur aufgeheizt wird, die unterhalb der Vernetzungstemperatur des Bindemittels liegt. Hierdurch wird eine möglichst homogene Erwärmung der Reibbelagmischung auf ein Niveau unterhalb der Vernetzungstemperatur erzielt, ohne dass etwaige Vernetzungsreaktionen des Bindemittels wesentlich einsetzen.

Dieses Vorheizen auf eine, vorzugsweise nur knapp unterhalb der Vernetzungs- bzw. Formgebungstemperatur liegende, Temperatur hat jedoch den Vorteil, dass bei dem sich anschließenden Formgebungsprozess nur noch eine geringfügige Erwärmung der Reibbelagmischung mit einem gleichwohl geringen Temperaturgradienten erfolgt.

Bei solch geringfügigen Temperaturänderungen bzw. Temperaturgradienten ist eine im Wesentlichen homogene (Rest-) Erwärmung der Reibbelagmischung die Folge.

Nach einer weiteren Ausgestaltung der Erfindung wird die Reibbelagmischung während des Formgebungsprozesses einem vorgegebenen Temperaturprofil folgend erwärmt und/oder abgekühlt. Das Temperaturprofil ist hierbei im Wesentlichen durch die Zusammensetzung der Reibbelagmischung, dem vom Presswerkzeug erzeugbaren Druck, die Geometrie des herzustellenden Reibbelags und die Dauer des Formgebungsprozesses bestimmt. Vorzugsweise wird das Temperaturprofil in Abhängigkeit der vorgenannten, teils vorbestimmten Parameter optimiert.

Nach einer weiteren vorteilhaften Ausgestaltung der Erfindung erfolgt ein Entgasen der Pressform kontinuierlich während des Formgebungsprozesses ohne wesentliche Minderung des auf die Reibbelagmischung wirkenden Drucks. Folglich sind bei dem erfindungsgemäßen Herstellungsverfahren keine gesonderten Entlüftungsprozesse oder -Schritte vorgesehen, bei denen das Presswerkzeug etwa aus der Pressform angehoben würde.

Weiterhin ist vorgesehen, dass die Pressform vor einer Befüllung mit der Reibbelagmischung mit ihrem dem Presswerkzeug gegenüberliegenden Endabschnitt mit einer Belagträgerplatte in Anlagestellung gebracht wird. Vorzugsweise wird hierbei eine nach unten offene Pressform auf eine Belagträgerplatte gestellt. Anschließend wird die Reibbelagmischung, ggf. nach Einbringen einer Zwischenschicht, auf die Belagträgerplatte in die Form gefüllt und anschließend mittels des erfindungsgemäßen Formgebungsprozesses verdichtet und gehärtet. Somit wird der Reibbelag direkt bei seiner Herstellung mit einer Belagträgerplatte verbunden.

Nach einer weiteren vorteilhaften Ausführungsform der Erfindung ist vorgesehen, dass ein Verstellweg des Presswerkzeugs abhängig von einer vorgegebenen Geometrie des Reibbelags eingestellt wird. Durch die Verstellbegrenzung des Presswerkzeugs wird in vorteilhafter Weise erreicht, dass die Reibbelagmischung nicht über ein vorgegebenes Mindestmaß hinaus verdichtet werden kann. Somit wird eine hohe Maßhaltigkeit der Reibbeläge erreicht, ohne dass es hier zu irgendwelcher Regelungs- oder Prüfmechanismen bedürfe.

Weiterhin ist vorgesehen, dass vor und/oder während dem Formgebungsprozess ein Verdichten der Reibbelagmischung mittels einer Vibrationseinrichtung erfolgt. Da die Reibbelagmischung vor dem Formgebungsprozess im Wesentlichen in granularer Form vorliegt, kann durch einen solchen Rüttelvorgang ein nicht unerhebliches Verdichten der Reibbelagmischung vor dem eigentlichen Formgebungsprozess erfolgen.

Solch vorteilhafte Rüttel- oder Vibrationsprozesse können insbesondere mit einer erfindungsgemäßen Vorrichtung erfolgen, bei welcher im Vergleich zum Stand der Technik deutlich geringere Presskräfte erzeugt werden müssen. Bei dem im Stand der Technik zur Erzeugung hoher Drücke üblichen Heißpresseinrichtungen sind Rüttel- oder Vibrationsvorgänge aufgrund der zumeist massiv ausgebildeten Form- und Presswerkzeuge schlicht undenkbar.

Nach einer weiteren Ausführungsform der Erfindung erfolgt der Wärmeeintrag in die Reibbelagmischung über das Presswerkzeug und/oder über die Belagträgerplatte und/oder über die Pressform, in welche die Reibbelagmischung eingefüllt wird. Es ist jedoch auch denkbar, dass der Wärmeeintrag bzw. die Erwärmung der Reibbelagmischung in einem Umluftofen erfolgt, in welchem die die Reibbelagmischung unmittelbar umgebenden bzw. umschließenden Elemente selbst durch die Umgebungsluft vorzugsweise relativ langsam aufgeheizt werden.

Nach einer weiteren vorteilhaften Ausgestaltung der Erfindung erfolgt der Wärmeeintrag in die Reibbelagmischung mittels Beaufschlagung eines elektrischen Stroms. Durch den elektrischen Widerstand des Reibmaterials wird der Pressling homogen und gleichmäßig erhitzt. Die Trägerplatte, das Presswerkzeug und/oder die Pressform müssen hierbei nicht gesondert erwärmt werden, sondern nehmen allenfalls lediglich die Abwärme des über den elektrischen Strom erhitzten Reibmaterials auf. Dies hat eine zügige aber gleichmäßige Erwärmung des Presslings zur Folge.

Weiterhin ist vorgesehen, dass der während des Formgebungsprozesses auf die Reibbelagmischung einwirkende Druck mittels eines pneumatischen, hydraulischen oder federkraftbeaufschlagten Druck- oder Hebelmechanismus und/oder von der Gewichtskraft des Presswerkzeugs erzeugt wird. Hierbei können insbesondere Spannvorrichtungen verwendet werden, bei welchen ein Pressstempel unter Einwirkung einer Federkraft mit einem im Wesentlichen konstanten Druck möglicherweise auch unter Ausnutzung der Gewichtskraft des Pressstempels gegen die zu verdichtende Reibbelagmischung oder Schüttmasse drückt. Es sind ferner auch solche Spannvorrichtungen denkbar, bei denen zum Beispiel mittels eines federbeaufschlagten Kniehebels, der für den Formgebungsprozess erforderliche Druck auf das Presswerkzeug ausgeübt wird.

Nach einem weiteren unabhängigen Aspekt betrifft die Erfindung eine Vorrichtung zur Herstellung von Reibbelägen, welche eine Pressform und ein Presswerkzeug aufweist, wobei die Pressform zur Aufnahme einer Reibbelagmischung ausgebildet und das Presswerkzeug zur Erzeugung eines Drucks auf die zu verdichtende, von der Pressform aufgenommene Reibbelagmischung vorgesehen ist. Hierbei sind die Pressform und das Presswerkzeug derart aufeinander abgestimmt, dass sie zur Erzeugung eines Drucks von maximal 6 N/mm² ausgelegt sind und der Verstellweg des Presswerkzeugs abhängig von der vorgegebenen Geometrie des Reibbelags mittels einer Verstellbegrenzung einstellbar und/oder begrenzbar ist.

Nach einem weiteren vorteilhaften Aspekt der Erfindung sind für ein Entgasen der Pressform zwischen dem Presswerkzeug und der Innenwandung der Form Entlüftungsschlitze vorgesehen, über welche die verdichteten, in der Reibmischung ursprünglich enthaltenen und/oder solche während des Formgebungsprozesses entstehende Prozessgase entweichen können, ohne dass hierfür eine Minderung des vom Presswerkzeug auf die Reibbelagmischung ausgeübten Drucks erforderlich wäre.

### Ausführungsbeispiele

Weitere Ziele, Vorteile, Merkmale und vorteilhafte Wirkungen der vorliegenden Erfindung ergeben sich aus der nachfolgenden Beschreibung der Ausführungsbeispiele anhand der Figuren. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Patentansprüchen oder deren Rückbeziehung.

Es zeigen:
- Figur 1: eine Vorrichtung zur Durchführung des erfindungsgemäßen Verfahrens in einer Ausgangsstellung,
- Figur 2: die Vorrichtung mit in die Pressform eingefüllter Zwischenschicht und Reibbelagmischung,
- Figur 3: die Vorrichtung gemäß Figur 2 unter vibrierender Vorverdichtung,
- Figur 4: die Vorrichtung gemäß der Figuren 2 und 3 zu Beginn des Formgebungsprozesses,
- Figur 5: die Vorrichtung gemäß der Figuren 2 bis 4 am Ende des Formgebungsprozesses,
- Figur 6: den erfindungsgemäß hergestellten Reibbelag bei Entnahme aus der Form und
- Figur 7: eine weitere Ausführungsform der Vorrichtung am Ende des Formgebungsprozesses.

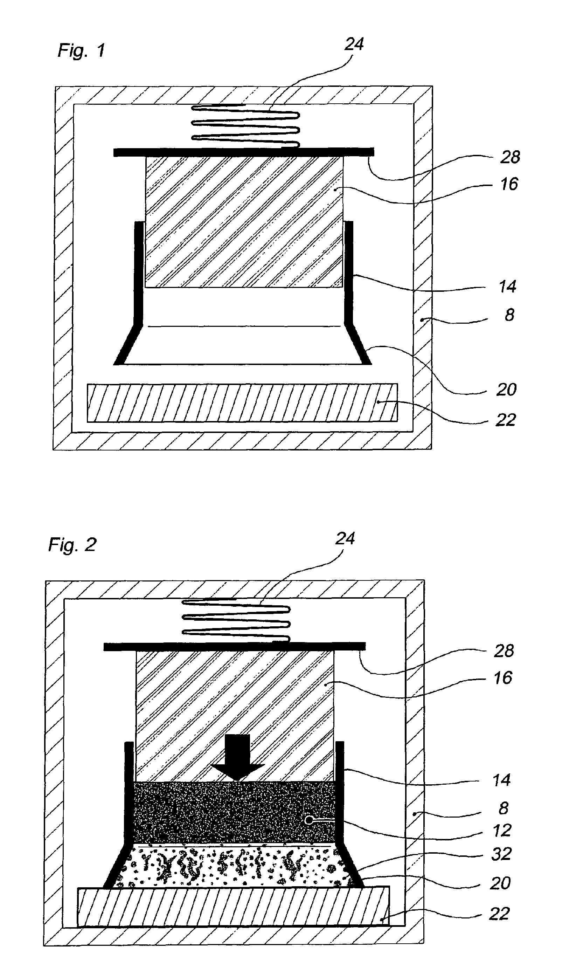

Die Vorrichtung zur Durchführung des erfindungsgemäßen Verfahrens ist in einem schematischen Querschnitt anhand der Figuren 1 bis 6 dargestellt. Diese weist einen Rahmen 8, beispielsweise einen Spannrahmen, auf, in welchem eine Belagträgerplatte 22 angeordnet wird. Daran anschließend wird, wie anhand der Figur 1 angedeutet, eine Pressform 14 auf die Belagträgerplatte 22 gestellt, in welcher nachfolgend zunächst ein Material für eine Zwischenschicht 32 und schließlich die Reibbelagmischung 12 eingefüllt wird. Naturgemäß ist die Höhe der Form 14 größer als die Füllstandshöhe der in die Form einzufüllenden Mischungen 12, 32.

Das in Form eines Pressstempels ausgebildete Presswerkzeug 16 ist über ein Federelement 24 mit dem oberen Abschnitt des Rahmens 8 verbunden und übt nach der Befüllung der Form 14 mit der Reibbelagmischung 12, 32 einen vorzugsweise konstanten Druck auf die Reibbelagmischung 12 aus, der maximal 6 N/mm² beträgt, vorzugsweise zwischen 0,3 und 4 N/mm² liegt.

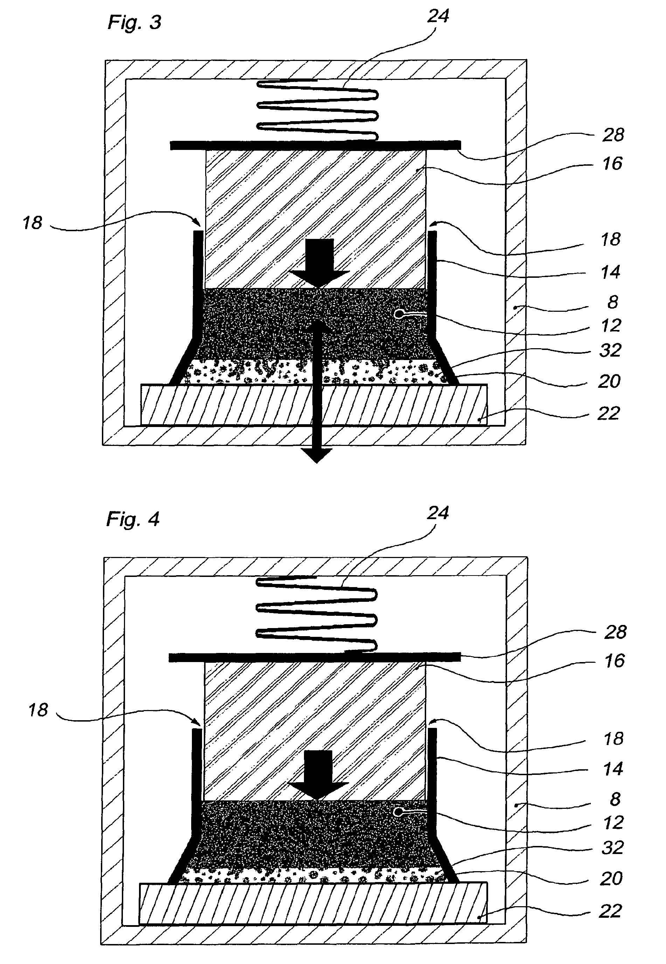

In der Darstellung gemäß Figur 3 ist das Ergebnis einer Vibrationsverdichtung dargestellt, bei welcher durch Rütteln bzw. ein Vibrieren der gesamten Vorrichtung aufgrund der granularen Beschaffenheit der Füllmasse 12, 32 bereits ein Vorverdichten ohne Erwärmung bzw. Temperatureintrag erfolgen kann. Folglich ist hier eine deutlich reduzierte Füllhöhe gegenüber dem Ausgangszustand nach Figur 2 zu erkennen.

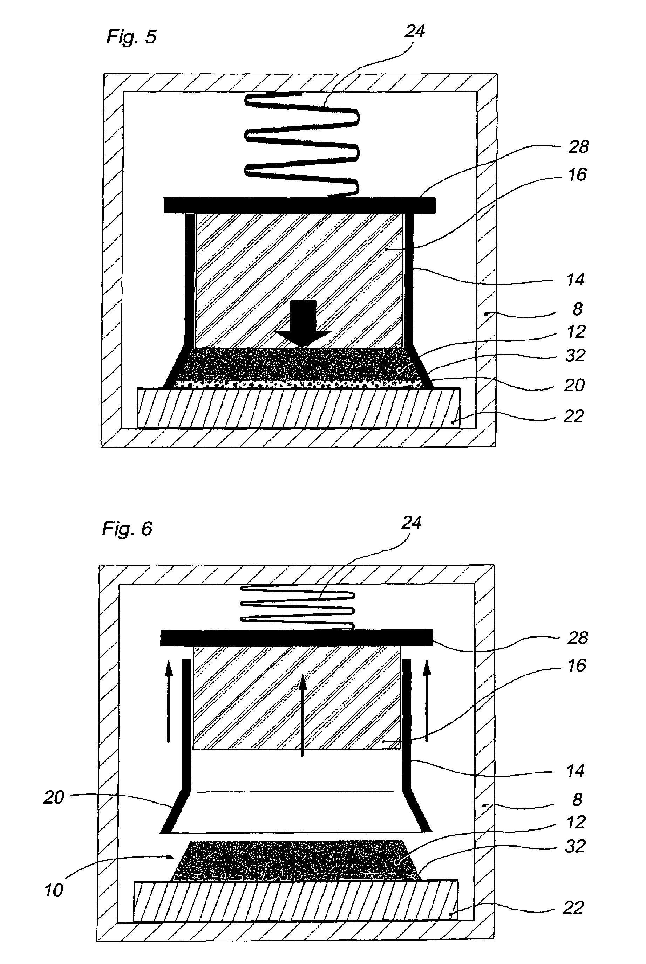

Figur 4 zeigt die Vorrichtung während eines Formgebungsprozesses, bei welchem unter Temperatureinwirkung die Viskosität der Bindemittel der Reibmischung 12, 32 möglichst homogen über die Fläche des Pressstempels gleichmäßig und langsam herabgesetzt wird. Durch die aufschmelzenden Bindemittel, wie etwa Kunstharze oder Phenolharze, wird die gesamte Belagstruktur 12, 32 zunehmend viskos, so dass letztlich Zwischenräume zwischen den Partikeln der Reibbelagmischung durch das aufgeschmolzene und (zäh-) flüssige Bindemittel ausgefüllt werden können. Eine weitere Verdichtung, welche letztlich in dem in Figur 5 gezeigten Zustand endet, ist die Folge.

Die während der Vibrationsverdichtung nach Figur 3 aus der Reibbelagmischung 12, 32 verdrängten Gase können über die zwischen Innenwandung der Form 14 und dem Pressstempel 16 vorgesehenen Entlüftungsschlitze 18 nach oben entweichen. Gleiches gilt für die bei den Reaktionsprozessen innerhalb der Reibbelagmischung entstehenden Gase während des Formgebungsprozesses nach Figur 4.

Wenn der in der Figur 5 dargestellte Endzustand erreicht ist, wirkt im Wesentlichen keine oder nur noch ein geringe Zuspannkraft auf die Reibbelagmischung 12, da ein oberer Anschlag 28 des Pressstempels 16 nunmehr auf dem oberen Endabschnitt der Pressform 14 aufliegt und nicht mehr weiter nach unten bewegt werden kann. Auf diese Art und Weise können die herzustellenden Reibbeläge nicht über ein vorgegebenes Maß hinaus verdichtet werden, sodass eine präzise und hohe Fertigungs- bzw. Maßhaltigkeit der Reibbeläge stets gegeben ist.

Je nach Anforderungen verbleibt die auf das Endmaß verdichtete Reibbelagmischung 12, 32 in der Form 14, wie in Figur 5 dargestellt, bis die Bindemittel im Wesentlichen vollständig vernetzt sind.

Anschließend, das heißt vorzugsweise nach der vollständigen Vernetzung des Bindemittels, kann der fertige Reibbelag 10 aus der Pressform 14 entnommen werden. Diese wird hierzu zusammen mit dem Presswerkzeug 16 nach oben bewegt, sodass der fertige aus Belagträgerplatte 22, Zwischenschicht 32 und Reibschicht 12 bestehende Reibbelag 10 aus dem Spannrahmen 8 entnommen werden kann.

Die Pressform 14 ist an ihrem der Belagträgerplatte 22 zugewandten Endabschnitt 20 leicht verbreitert zur Bildung einer Anformschräge ausgebildet, um letztlich eine seitlich abgeschrägte Kontur des Reibbelags 10 zu erzielen. Aufgrund der Viskosität und der beim Formgebungsprozess herabgesetzten internen Reibung der Reibbelagmischung 12 schmiegen sich die Partikel der Schüttmasse an die durch die Pressform 14 vorgegebene Geometrie problemlos an.

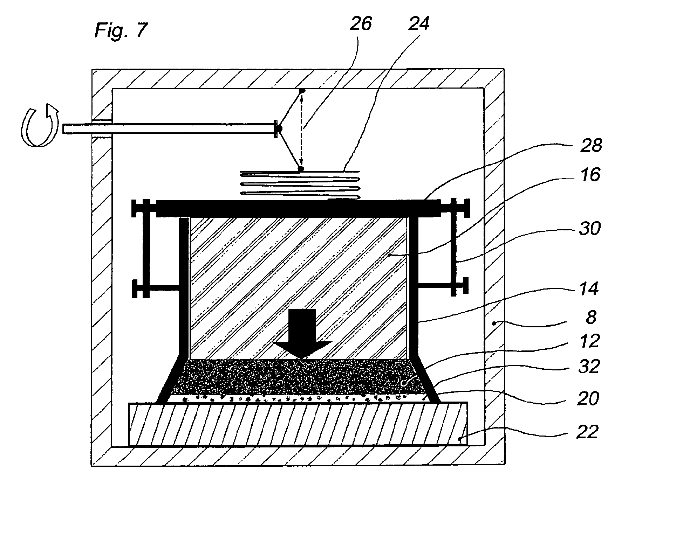

Figur 7 zeigt eine weitere Ausführungsform der Vorrichtung zur Durchführung des erfindungsgemäßen Verfahrens, bei welcher eine Zuspannfeder 24 über eine einstellbare Spannvorrichtung, wie zum Beispiel einen Kniehebel, beliebig unter Spannung gesetzt werden kann, um verschiedene Presskräfte zu erzeugen. Zusätzlich ist hier die Pressform 14 mit einer Anschlagsbegrenzung 30 ausgestattet, die ein variables Verstellen des maximalen Verstell- oder Hubwegs des Pressstempels 16 ermöglicht.

### Bezugszeichenliste

- 8: Rahmen
- 10: Reibbelag
- 12: Reibbelagmischung
- 14: Pressform
- 16: Presswerkzeug, Stempel
- 18: Entlüftungsschlitz
- 20: Endabschnitt, Anformschräge
- 22: Belagträgerplatte
- 24: Feder
- 26: Spannvorrichtung
- 28: Anschlag
- 30: Anschlagsbegrenzung
- 32: Zwischenschicht

## Patentansprüche

1. Verfahren zur Herstellung von Reibbelägen (10) insbesondere von Reibbelägen für Kupplungen oder Bremsen von Fahrzeugen, wobei eine Bindemittel aufweisende Reibbelagmischung (12) in eine Form (14) gegeben und einem Formgebungsprozess unterzogen wird, **dadurch gekennzeichnet, dass** zum i. W. vollständigen Vernetzen des Bindemittels während des Formgebungsprozesses und zur Formgebung des Reibbelages (10) während des Formgebungsprozesses ein mittels eines Presswerkzeugs (16) erzeugbarer Druck von maximal 6 N/mm² auf die Reibbelagmischung (12) ausgeübt wird.

2. Verfahren nach Anspruch 1, **dadurch gekennzeichnet, dass** der auf die Reibbelagmischung (12) während des gesamten Formgebungsprozesses ausgeübte Druck i. W. konstant bleibt oder kontinuierlich abnimmt.

3. Verfahren nach einem oder mehreren der vorhergehenden Ansprüche, **dadurch gekennzeichnet, dass** zumindest zu Beginn des Formgebungsprozesses eine i. W. homogene Erwärmung der Reibbelagmischung (12) auf eine Formgebungstemperatur erfolgt.

4. Verfahren nach einem oder mehreren der vorhergehenden Ansprüche, **dadurch gekennzeichnet, dass** die Reibbelagmischung (12) während des Formgebungsprozesses zumindest zeitweise auf die Formgebungstemperatur erhitzt wird, die im Bereich der Vernetzungstemperatur des Bindemittels liegt.

5. Verfahren nach einem oder mehreren der vorhergehenden Ansprüche, **dadurch gekennzeichnet, dass** die Reibbelagmischung (12) vor dem Formgebungsprozess auf eine Temperatur unterhalb der Vernetzungstemperatur des Bindemittels aufgeheizt wird.

6. Verfahren nach einem oder mehreren der vorhergehenden Ansprüche, **dadurch gekennzeichnet, dass** die Reibbelagmischung (12) während des Formgebungsprozesses einem vorgegebenen Temperaturprofil folgend erwärmt und/oder abgekühlt wird.

7. Verfahren nach einem oder mehreren der vorhergehenden Ansprüche, **dadurch gekennzeichnet, dass** ein Entgasen der Form (14) kontinuierlich während des Formgebungsprozesses ohne wesentliche Minderung des auf die Reibbelagmischung (12) wirkenden Drucks erfolgt.

8. Verfahren nach einem oder mehreren der vorhergehenden Ansprüche, **dadurch gekennzeichnet, dass** die Form (14) vor der Befüllung mit der Reibbelagmischung (12) mit ihrem dem Presswerkzeug (16) gegenüberliegenden Endabschnitt (20) mit einer Belagträgerplatte (22) in Anlagestellung gebracht wird.

9. Verfahren nach einem oder mehreren der vorhergehenden Ansprüche, **dadurch gekennzeichnet, dass** der Verstellweg des Presswerkzeugs (16) abhängig von einer vorgegebenen Geometrie des Reibbelags eingestellt und/oder begrenzt wird.

10. Verfahren nach einem oder vorhergehenden Ansprüche, **dadurch gekennzeichnet, dass** vor und/oder während dem Formgebungsprozess ein Vorverdichten der Reibbelagmischung (12) mittels einer Vibrationseinrichtung erfolgt.

11. Verfahren nach einem oder mehreren der vorhergehenden Ansprüche, **dadurch gekennzeichnet, dass** ein Wärmeeintrag in die Reibbelagmischung (12) über das Presswerkzeug (16), und/oder über die Belagträgerplatte (22) und/oder über die Form (14) erfolgt.

12. Verfahren nach einem oder mehreren der vorhergehenden Ansprüche, **dadurch gekennzeichnet, dass** der Wärmeeintrag in die Reibbelagmischung (12) mittels Beaufschlagung eines elektrischen Stroms auf die Formgebungstemperatur erfolgt.

13. Verfahren nach einem der vorhergehenden Ansprüche, **dadurch gekennzeichnet, dass** der auf die Reibbelagmischung (12) einwirkende Druck mittels eines pneumatischen, hydraulischen oder Federkraft beaufschlagten Druck- oder Hebelmechanismus und/oder von der Gewichtskraft des Presswerkzeugs (16) erzeugt wird.

14. Vorrichtung zur Herstellung von Reibbelägen (10), insbesondere zur Durchführung des Verfahrens nach einem der vorhergehenden Ansprüche, mit einer Pressform (14), die zur Aufnahme einer Reibbelagmischung (12) ausgebildet ist und einem Presswerkzeug, welches zur Erzeugung eines Drucks auf die zu verdichtende Reibbelagmischung (12) vorgesehen ist, **dadurch gekennzeichnet, dass** die Pressform (14) und das Presswerkzeug (16) zur Erzeugung eines Drucks von maximal 6 N/mm² ausgelegt sind und dass der Verstellweg des Presswerkzeugs (16) abhängig von der vorgegebenen Geometrie des Reibbelags (10) mittels einer Verstellbegrenzung (30) einstellbar und/oder begrenzbar ist.

15. Vorrichtung nach Anspruch 14, **dadurch gekennzeichnet, dass** zwischen dem Presswerkzeug (16) und der Innenwandung der Form (14) Entlüftungsschlitze (18) vorgesehen sind.
